Europäisches Patentamt

European Patent Office

Office européen des brevets

(19)

(11) Veröffentlichungsnummer: **0 319 013**
**B1**

(12)

# EUROPÄISCHE PATENTSCHRIFT

(45) Veröffentlichungstag der Patentschrift: 30.01.91

(51) Int. Cl.⁵: **B 62 D 43/00**

(21) Anmeldenummer: **88120126.3**

(22) Anmeldetag: **02.12.88**

(54) Ersatzradhalterung für Nutzfahrzeuge.

(30) Priorität: **02.12.87 DE 3740819**

(43) Veröffentlichungstag der Anmeldung:
**07.06.89 Patentblatt 89/23**

(45) Bekanntmachung des Hinweises auf die
Patenterteilung:
**30.01.91 Patentblatt 91/05**

(84) Benannte Vertragsstaaten:
**DE FR GB IT NL SE**

(56) Entgegenhaltungen:
**BE-A- 532 503**
**DD-A- 220 565**
**FR-A-2 439 125**
**GB-A-2 160 486**
**US-A-2 991 894**

(73) Patentinhaber: **DAIMLER-BENZ
AKTIENGESELLSCHAFT
Mercedesstrasse 136
D-7000 Stuttgart 60 (DE)**

(72) Erfinder: **Steiner, Kurt
Im Egert 19
D-7305 Altbach (DE)**

Courier Press, Leamington Spa, England.

**Beschreibung**

Die Erfindung betrifft eine Ersatzradhalterung für Nutzfahrzeuge mit einer Tragvorrichtung, über die das Ersatzrad in seiner aufrechten, innerhalb des Fahrzeugumrisses liegenden Ruhestellung gehalten und in eine nach außen verlagerte Nutzstellung ausschwenkbar ist und die einen basisseitig mit dem Fahrzeug verbundenen und in der Ruhelage des Ersatzrades aufragenden Tragarm aufweist, an dessen freiem Ende ein Schwenkarm angelenkt ist, dessen Schwenkachse zur Schwenkachse des Tragarmes parallel verläuft und an dessen freiem Ende bei zu den Schwenkachsen quer liegenden Radebene das Ersatzrad zentrisch gelagert ist, dessen Schwenkweg in die Ruhelage durch eine Halterung begrenzt ist, wobei, bezogen auf die Ruhelage des Ersatzrades, dessen Drehachse zwischen der den Tragarm und den Schwenkarm verbindenden Drehachse und der den Tragarm fahrzeugseitig anlenkenden Schwenkachse liegt, die gegenüber der Drehachse des Ersatzrades nach außen verlagert ist.

Eine solche Ersatzradhalterung ist aus der DD-PS 220 565 bekannt. Dort sind verhältnismäßig große Schwenkwege gegeben, so daß die Vorrichtung eine große Bautiefe hat und zudem einen verhältnismäßig großen Kraftaufwand zur Verstellung erfordert.

Der Erfindung liegt die Aufgabe zugrunde, eine Ersatzradhalterung der genannten Art dahingehend weiterzubilden, daß ein moglichst kleiner Bauraumbedarf gegeben ist und die Verstellung bei möglichst geringem Kraftaufwand möglich ist.

Diese Aufgabe wird durch die kennzeichnenden Merkmale des Anspruches 1 gelöst, wobei zum Verschwenken in die Ruhestellung aufgrund der Abstützung auf der Radlauffläche nur geringe Kräfte erforderlich sind. Zudem ist in der Ruhestellung eine von der Tragvorrichtung weitgehend unabhängige Abstützung des Ersatzrades auf der Radlauffläche gegeben, so daß die Tragvorrichtung im Fahrbetrieb nur verhältnismäßig kleinen Belastungen ausgesetzt ist. Ferner führt das Zusammenwirken der Tragvorrichtung mit der Lauffläche zu einer selbsttätigen Verspannung des Ersatzrades in der Ruhestellung. Eine zusätzliche Sicherung kann hierbei über ein Abstützglied erreicht werden, das als Auflaufschuh in Verlängerung des nach außen abfallenden Teiles der Lauffläche vorgesehen sein kann und in seiner ausgeschwenkten Schwenklage das Auflaufen des Ersatzrades auf die Radlauffläche erleichtert, während es in seiner eingeschwenkten Schwenklage der Sicherung des Ersatzrades in der Ruhelage dient.

Neben der Konstruktion gemäß DD-PS 220 565, von der die Erfindung ausgeht, ist aus der BE-A 532 503 bereits eine Ersatzradhalterung bekannt, die zwar in der Höhe verhältnismäßig gedrungen baut, dafür aber gleichfalls eine große Bautiefe benötigt.

Der Grund hierfür liegt darin, daß sie keine das Ersatzrad abstützende Radlauffläche mit in Ausschwenkrichtung ihres Tragarmes ansteigenden und abfallenden Laufflächenteilen aufweist. Demgemäß kann sich das Ersatzrad zum Absetzen bzw. Aufnehmen auch nicht fahrzeugseitig abwälzen.

Der Tragarm muß deshalb, bezogen auf die Fahrzeuglängsmittenebene, weit außenliegend angelenkt werden, damit das Rad auch mit über die betreffende Fahrzeuglängsseite vorstehenden Aufbauteilen berührungslos bleibt. Dies geht zu Lasten des zur Handhabung dieser Ersatzradhalterung erforderlichen Kraftaufwandes, was im Hinblick auf das beim Aus- und Einschwenken des Tragarmes zu beherrschende Moment eine Seilwinde notwendig macht, durch welche sich die Bautiefe entsprechend vergrößert.

Weitere Einzelheiten und Merkmale der Erfindung ergeben sich aus den Unteransprüchen.

In der Zeichnung ist ein Ausführungsbeispiel der Erfindung schematisch dargestellt. Es zeigt:

Fig. 1 eine Ansicht der auf einen Fahrgestellrahmen eines Nutzfahrzeugs aufmontierten Ersatzradhalterung mit aufgenommenem Ersatzrad, in ihrer Einschwenk-Endstellung und in Fahrzeuglängsrichtung gesehen,

Fig. 2 eine Ansicht der Ersatzradhalterung gemäß Fig. 1, wobei deren Tragarm in seiner Ausschwenk-Endstellung gezeigt ist,

Figuren 3 und 4 in einer Ansicht ähnlich Fig. 1 Zwischenstellungen des Tragarmes, und

Fig. 5 eine Ansicht des Tragarmes in Richtung des Pfeiles A der Fig. 1 gesehen, teilweise abgebrochen dargestellt.

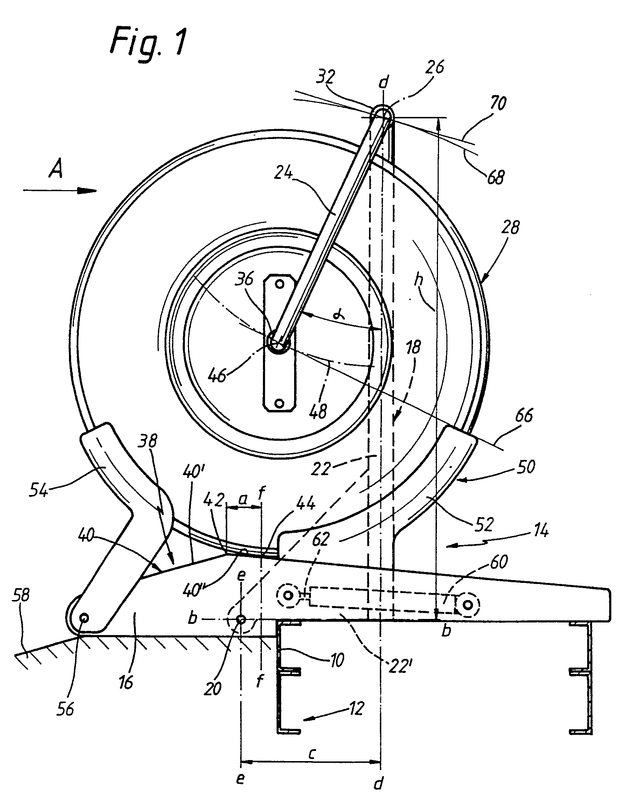

In Fig. 1 bezeichnet l0 einen auf einen Fahrgestellrahmen 12 eines Nutzfahrzeuges aufgesetzten Hilfsrahmen. Auf diesen ist hinter einem nicht dargestellten Fahrerhaus eine Ersatzradhalterung 14 aufgebaut. Diese weist einen auf dem Hilfsrahmen 10 aufruhenden Träger 16 auf, der sich in Fahrzeugquerrichtung erstreckt und in Art eines Auslegers über die gemäß Fig. 1 linke Rahmenlängsseite übersteht. Am Träger 16 ist eine als Ganzes mit 18 bezeichnete Tragvorrichtung um eine sich in Fahrzeuglängsrichtung erstreckende Schwenkachse 20 verschwenkbar gelagert.

Die Tragvorrichtung 18 setzt sich aus zwei Teilstücken, nämlich aus einem Tragarm 22 und einem Schwenkarm 24 zusammen, die um eine parallel zur Schwenkachse 20 liegende Schwenkachse 26 miteinander schwenkbar verbunden sind.

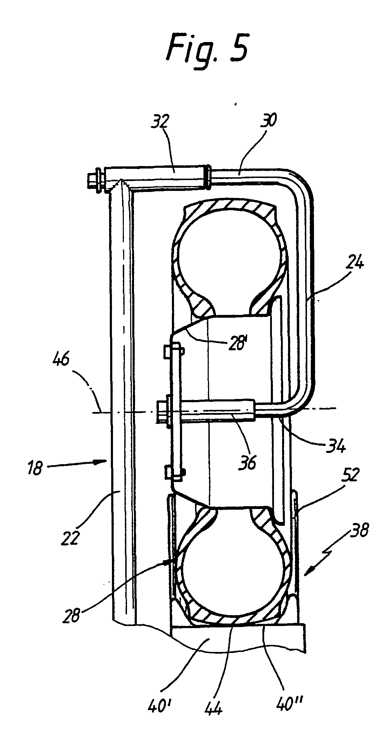

Am freien Ende des Schwenkarmes 24 ist ein Ersatzrad 28 des Nutzfahrzeuges in einer aufrechten Lage parallel zur Schwenkrichtung der Tragvorrichtung 18 drehbar zu befestigen. Zu diesem Zweck ist der Schwenkarm 24, wie Fig. 5 zeigt, beispielsweise U-förmig ausgebildet, dessen einer, horizontal gerichteter U-Schenkel 30 in einer Lagerbuchse 32 des Tragarmes 22 gelagert ist und auf dessen anderem U-Schenkel 34 eine an einer Radschüssel 28' des Ersatzrades 28 zentral anschraubbare Lagerbuchse 36 drehbar aufsteckbar und gegen Lösen zu sichern ist.

Dem Ersatzrad 28 ist eine als Ganzes mit 38 bezeichnete Führungsvorrichtung zugeordnet, die es ermöglicht, die Längen von Tragarm 22 und Schwenkarm 24 so aufeinander abzustimmen, daß der Tragvorrichtung 18 in ihrer Einschwenk-Endstellung bei z.B. aufrecht stehendem Tragarm 22 bei hochbauenden Nutzfahrzeugen nicht über das höchstzulässige Fahrzeughöhenmaß hinausragt.

Die Führungsvorrichtung 38 weist eine sich in der Schwenkebene des Ersatzrades 28 in Fahrzeugquerrichtung erstreckende Radlauffläche 40 auf, die, in Einschwenkrichtung der Tragvorrichtung 18 gesehen, einen aufsteigenden Laufflächenabschnitt 40' aufweist, an den sich ein abfallender Laufflächenabschnitt 40'' anschließt.

Das in seine Ruhelage hochzuschwenkende Ersatzrad 28 wälzt sich mit seiner Reifenlauffläche auf der Radlauffläche 40 ab, wobei die durch sie definierte Kurve beim Ein- und Ausschwenken der Tragvorrichtung 18 die Schwenkbewegung des das Ersatzrad 28 tragenden Schwenkarmes 24 derart steuert, daß der Tragarm 22 möglichst kurz ausgelegt werden kann.

Wie Fig. 1 zeigt, befindet sich der Scheitel 42 der Radlauffläche 40, in Ausschwenkrichtung der Tragvorrichtung 18 gesehen, in einem Seitenabstand a vom Radaufstandspunkt 44, der sich in der Einschwenk-Endstellung der Tragvorrichtung 18 auf dem abfallenden Laufflächenabschnitt 40'' befindet.

Die Konstruktion ist vorzugsweise so gewählt, daß in der aufrechten Einschwenk-Endstellung des Tragarmes 22 sich die Drehachse 46 des Ersatzrades 28 unter Schwerkrafteinfluß mittels des Schwenkarmes 24 entlang eines Schwenkkreises 48 zu verschwenken versucht, die sicherstellt, daß das Ersatzrad 28 mit einem unteren Umfangsteil auf dem Laufflächenabschnitt 40'' aufsteht und schon dadurch dessen Ruhelage hinter dem Fahrerhaus in Fahrzeugquerrichtung festgelegt wird. Vorzugsweise ist jedoch zusätzlich noch eine Haltevorrichtung 50 vorgesehen, welche das Ersatzrad 28 in der Ruhelage der Tragvorrichtung 18 in Fahrzeugquerrichtung nach beiden Seiten sichert.

Hierzu weist die Haltevorrichtung 50 ein dem unteren Radumfangsabschnitt zugeordnetes, sich an den Laufflächenabschnitt 40'' anschließendes erstes, segment- bzw. schalenförmiges, stationäres Abstützglied 52 und ein diesem gegenüberliegendes, zweites Abstützglied 54 auf, das um eine am Träger 16 angeordnete, zur Schwenkachse 20 parallele Schwenkachse 56 verschwenkbar ist.

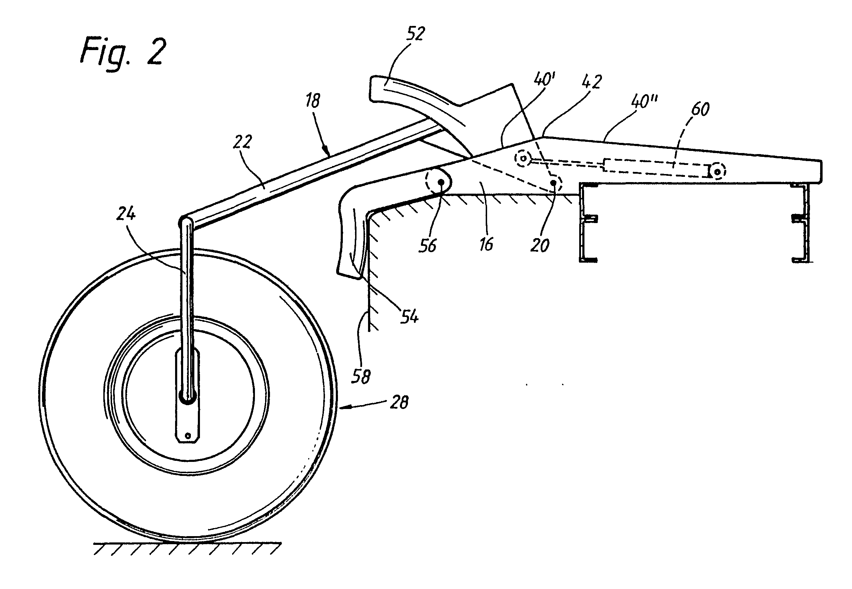

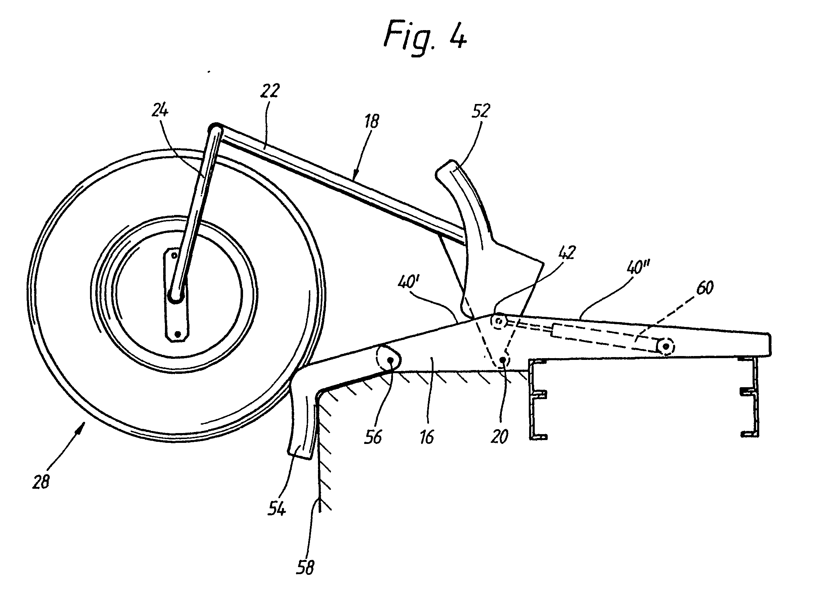

In seiner hochgeklappten Abstützstellung ist das Abstützglied 54 am Träger 16 verriegelbar, während es in seiner in Fig. 2 gezeigten Freigabestellung eine Verlängerung des Laufflächenabschnittes 40' der Radlauffläche 40 bildet, welche im Verlaufe der Ausschwenkbewegung der Tragvorrichtung 18 die Führung des Ersatzrades 28 weiter übernimmt. Dabei bildet dieses Abstützglied 54 in dieser Stellung eine Verlängerung des einen Ausleger bildenden Teils des Trägers 16, die beim vorliegenden Ausführungsbeispiel so beschaffen ist, daß mit ihrer Hilfe das Ersatzrad 28 über ein am Fahrgestell seitlich vorstehendes Fahrzeugteil 58, beispielsweise ein Kotflügel, berührungslos hinweggeführt wird (siehe Fig. 4).

Der Tragarm 22 kann beliebig gestaltet sein; es muß lediglich gewährleistet sein, daß ein Verhältnis der Länge des Schwenkarmes 24 zum Höhenabstand h seiner Schwenkachse 26 von der die Schwenkachse 20 enthaltenden Horizontalebene b-b von ungefähr l:2 gegeben ist und wobei, in Ausschwenkrichtung der Tragvorrichtung 18 gesehen, ein Seitenabstand c der Schwenkachse 20 von einer die Schwenkachse 26 des Schwenkarmes 24 enthaltenden Vertikalebene d-d so groß ist, daß sich eine die Schwenkachse 20 enthaltende Vertikalebene e-e zwischen dem Scheitel 42 der Radlauffläche 40 und einer den Radaufstandspunkt 44 enthaltenden Vertikalebene f-f befindet.

In diesem Falle erstreckt sich in der Ruhelage der Tragvorrichtung 18 der Schwenkarm 24 unter einem spitzen Winkel α zu der seine Schwenkachse 26 enthaltenden Vertikalebene d-d, welche Schräglage zum Absenken des Ersatzrades 28, aufgrund der am Tragarm 22 frei schwenkbaren Anordnung des Schwenkarmes 24, erforderlich ist.

Beim vorliegenden Ausführungsbeispiel bildet der Tragarm 22 einen Winkelhebel, dessen kürzerer, auf der Schwenkachse 20 gelagerter Hebelschenkel 22' zugleich einen mit einem Teil des Trägers 16 in der Ruhelage zusammenwirkenden Anschlag bildet, durch den die aufrechte Stellung des Tragarmes 22 festgelegt wird.

Außerdem bietet diese Ausbildung den Vorteil, bei verhältnismäßig kurzer Bemessung des Tragarmes 22, diesen in der Ruhelage verhältnismäßig weit in Fahrzeugquerrichtung nach innen verlegen zu können, so daß auch das Ersatzrad 28 in seiner Ruhelage hinter dem Fahrerhaus günstig zu plazieren ist.

Mit 60 ist als Stellantrieb beispielsweise ein doppeltwirkender, einerseits am Träger 16 und andererseits am Hebelschenkel 22' des Tragarmes 22 angelenkter Arbeitszylinder bezeichnet, der zum Ein- und Ausschwenken der Tragvorrichtung 18 dient.

Zum Absenken ist das Abstützglied 54 in seine in Fig. 2 gezeigte Stellung abzuklappen. Danach ist der Arbeitszylinder 60 einzuschalten. Dessen Kolbenstange 62 fährt aus und verschwenkt den Tragarm 22 um die Schwenkachse 20. Die unter dem Winkel α gegebene Schräglage des Schwenkarmes 24 führt hierbei zu einer Druckbelastung desselben, wodurch das Ersatzrad 28 auf dem Laufflächenabschnitt 40'' der Radlauffläche 40 in Richtung ihres Scheitels 42 hochgewälzt wird.

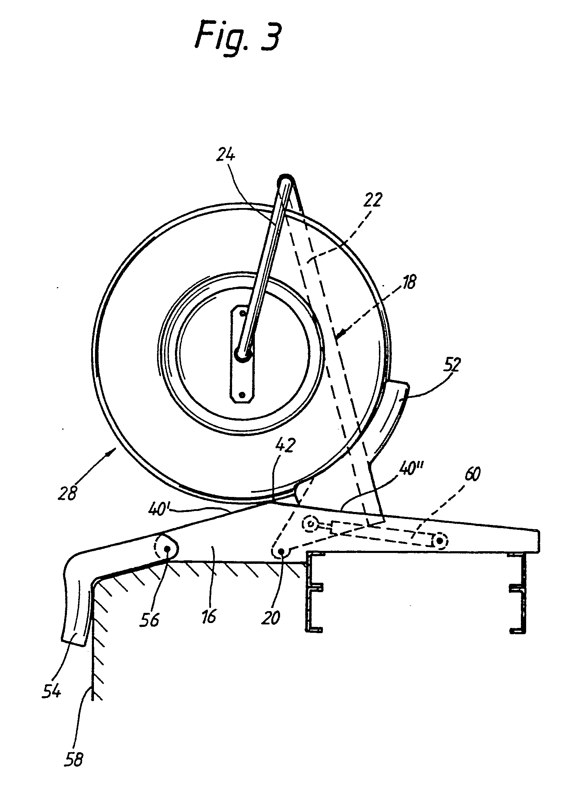

Nach Passieren des Scheitels 42 (Fig. 3) versucht das Ersatzrad 28 unter seinem Eigengewicht entlang des Laufflächenabschnittes 40' nach unten zu rollen (Fig. 4), wobei es schließlich von dem eine Verlängerung des abfallenden Flächenabschnittes 40' bildenden Abstützglied 54 freikommt und sich der das Ersatzrad 28 tragende Schwenkarm 24 zum Absetzen desselben lotrecht einstellen kann.

Beim Anheben des Ersatz- bzw. eines schadhaften Fahrzeugrades 28 läuft dasselbe zunächst auf das Abstützglied 54 auf und wird in der Folge bis zum Scheitel 42 der Radlauffläche 40 geschleppt, wonach es auf deren abfallendem Lauffflächenabschnitt 40'' in seine Ruhelage rollt, in welcher es sich am Abstützglied 52 abstützt. Danach ist es durch Hochklappen und Verriegeln des Abstützgliedes 54 zu sichern.

In den Zeichnungen ist der Schwenkkreis der Drehachse 46 des Ersatzrades 28 beim Verschwenken des Schwenkarmes 24 gegenüber dem Tragarm 22 mit 48 bezeichnet und die Tangente an diesem Schwenkkreis 48 in der Drehachse 46 mit 66. Für die Schwenkachse 26 ist der Schwenkkreis bei Verschwenken des Tragarmes 22 um die Schwenkachse 20 mit 68 bezeichnet; die an diesen in der Schwenkachse 26 gelegte Tangente mit 70.

## Patentansprüche

1. Ersatzradhalterung für Nutzfahrzeuge mit einer Tragvorrichtung, über die das Ersatzrad (28) in seiner aufrechten, innerhalb des Fahrzeugumrisses liegenden Ruhestellung gehalten und in eine nach außen verlagerte Nutzstellung ausschwenkbar ist und die einen basisseitig mit dem Fahrzeug verbundenen und in der Ruhelage des Ersatzrades (28) aufragenden Tragarm (22) aufweist, an dessen freiem Ende ein Schwenkarm (24) angelenkt ist, dessen Schwenkachse (26) zur Schwenkachse (20) des Tragarmes (22) parallel verläuft und an dessen freiem Ende bei zu den Schwenkachsen (20 und 26) quer liegender Radebene das Ersatzrad (28) zentrisch gelagert ist, dessen Schwenkweg in die Ruhelage durch eine Halterung (50) begrenzt ist, wobei, bezogen auf die Ruhelage des Ersatzrades (28), dessen Drehachse (46) zwischen der den Tragarm (22) und den Schwenkarm (24) verbindenden Schwenkachse (26) und der den Tragarm (22) fahrzeugseitig anlenkenden Schwenkachse (20) liegt, die gegenüber der Drehachse (46) des Ersatzrades (28) nach außen verlagert ist, dadurch gekennzeichnet, daß die auf eine zur Ausschwenkrichtung senkrechte Vertikalebene projizierte Länge des Tragarmes (22) zwischen der fahrzeugseitigen Schwenkachse (20) und der Schwenkachse (26) des das Ersatzrad (28) übergreifenden Schwenkarmes (24) etwa der doppelten Länge des Schwenkarmes (24) entspricht und daß fahrzeugseitig eine das Ersatzrad (28) abstützende Radlauffläche (40) vorgesehen ist, die teilweise nach außen ansteigt, wobei in der Projektion auf eine horizontale Rahmenebene der Radaufstandspunkt (44) in der Ruhelage zwischen der Schwenkachse (20) des Tragarmes (22) und der Drehachse (46) des Ersatzrades (28) auf dem nach außen ansteigenden Laufflächenteil (40'') liegt, an den ein nach außen abfallender, das Ersatzrad (28) von über die betreffende Fahrzeuglängsseite vorstehenden Aufbauteilen fernhaltender Laufflächenteil (40') anschließt.

2. Ersatzradhalterung nach Anspruch 1, dadurch gekennzeichnet, daß, bezogen auf eine etwa horizontale Fahrzeugrahmenebene, der Steigungswinkel des nach außen ansteigenden Laufflächenteils (40'') kleiner als der entsprechende Winkel einer Tangente (66) ist, die, in der Ruhelage des Ersatzrades (28), in der Drehachse (46) an den Schwenkkreis (48) der Drehachse (46) gelegt ist.

3. Ersatzradhalterung nach Anspruch 1 oder 2, dadurch gekennzeichnet, daß, bezogen auf eine etwa horizontale Fahrzeugrahmenebene, der Steigungswinkel des nach außen ansteigenden Laufflächenteils (40'') kleiner als der entsprechende Winkel einer Tangente (70) ist, die, in der Ruhelage des Ersatzrades (28), in der Schwenkachse (26) des Schwenkarmes (24) an den Schwenkkreis (68) gelegt ist, den die Schwenkachse (26) des Schwenkarmes (24) bei Verschwenken des Tragarmes (22) um seine basisseitige Schwenkachse (20) beschreibt.

4. Ersatzradhalterung nach Anspruch 2 oder 3, dadurch gekennzeichnet, daß die Steigung der in der Drehachse (46) an den Schwenkkreis (48) gelegten Tangente (66) größer ist als die Steigung der an den Schwenkkreis (68) der Schwenkachse (26) des Schwenkarmes (24) gelegten Tangente (70).

5. Ersatzradhalterung nach einem der vorhergehenden Ansprüche, dadurch gekennzeichnet, daß der Scheitel (42) zwischen dem abfallenden Laufflächenteil (40') und dem ansteigenden Laufflächenteil (40'') der Radlauffläche (40) in der Projektion auf eine Horizontalebene um einen Abstand zur Schwenkachse (20) des Tragarmes (22) nach außen versetzt liegt, der etwa dem Abstand des Radaufstandspunktes (44) zu dieser Schwenkachse (20) entspricht.

6. Ersatzradhalterung nach einem der vorhergehenden Ansprüche, dadurch gekennzeichnet, daß der Tragarm (22) über einen Stellantrieb (Arbeitszylinder 60) verschwenkbar ist.

## Revendications

1. Fixation de roue de secours pour véhicules utilitaires, comportant un dispositif de support à l'aide duquel la roue de secours (28) est maintenue dans sa position verticale de repos à l'intérieur du contour du véhicule et peut être amenée par pivotement dans une position d'utilisation décalée vers l'extérieur, et qui comporte un bras porteur (22) relié du côté base avec le véhicule, dirigé vers le haut dans la position de repos de la roue de secours (28) et à l'extrémité libre duquel est articulé un bras pivotant (24), dont l'axe de pivotement (26) est orienté parallèlement à l'axe de pivotement (20) du bras porteur et à l'extrémité libre duquel est montée la roue de secours (28) de façon centrée quand son plan est disposé perpendiculairement aux axes de pivotement (20 et 26), la course de pivotement de la roue étant limitée par un appui (50) dans la position de repos et, dans cette position de repos de la roue de secours (28), son axe de rotation (46) est situé entre l'axe de pivotement (26), reliant le bras porteur (22) et le bras pivotant (24), et l'axe de pivotement (20), assurant l'articulation du bras porteur (22) côté-véhicule et qui est décalé vers l'extérieur par rapport à l'axe de rotation (46) de la roue de secours (28), caractérisée en ce que la longueur du bras porteur (22), projetée sur un plan vertical perpendiculaire à la direction de pivotement vers l'extérieur, entre l'axe de pivotement (20) côté-véhicule et l'axe de pivotement (26) du bras pivotant (24) s'accrochant sur la roue de secours (28), est à peu près égale au double de la longueur du bras pivotant (24) et en ce que, côté-véhicule, il est prévu une surface (40) de roulement de roue soutenant la roue de secours (28) et qui monte en partie vers l'extérieur, et en ce que, dans la projection sur un plan structural horizontal, le point d'appui de roue (44) est situé, dans la position de repos entre l'axe de pivotement (20) du bras porteur (22) et l'axe de rotation (46) de la roue de secours (28), sur la partie de surface de roulement (40'') montant vers l'extérieur et qui est suivie par une partie de surface de roulement (40') descendant vers l'extérieur et maintenant la roue de secours (28) éloignée de parties structurales faisant saillie vers l'avant sur le côté longitudinal correspondant du véhicule.

2. Fixation de roue de secours selon la revendication 1, caractérisée en ce que, par rapport à un plan structural à peu près horizontal du véhicule, l'angle d'inclinaison de la partie de surface de roulement (40'') montant vers l'extérieur est plus petit que l'angle correspondant d'une tangente (66) qui, dans la position de repos de la roue de secours (28), est tracée, en passant par l'axe de rotation (46), au cercle de pivotement (48) de cet axe de rotation (46).

3. Fixation de roue de secours selon la revendication 1 ou 2, caractérisée en ce que, par rapport à un plan structural à peu près horizontal du véhicule, l'angle d'inclinaison de la partie de surface de roulement (40'') montant vers l'extérieur est plus petit que l'angle correspondant d'une tangente (70) qui, dans la position de repos de la roue de secours (28), est tracée, en passant par l'axe de pivotement (26) du bras pivotant (24), au cercle de pivotement (68) que décrit l'axe de pivotement (26) du bras pivotant (24) lors d'un déplacement angulaire du bras porteur (22) autour de son axe de pivotement (20) côté-base.

4. Fixation de roue de secours selon la revendication 2 ou 3, caractérisée en ce que l'inclinaison de la tangente (66) tracée, en passant par l'axe de rotation (46), au cercle de pivotement (48), est plus grande que l'inclinaison de la tangente (70) tracée, en passant par l'axe de pivotement (26) du bras pivotant (24) au cercle de pivotement (68).

5. Fixation de roue de secours selon l'une des revendications précédentes, caractérisée en ce que le sommet (42) entre la partie descendante (40') et la partie montante (40'') de la surface de roulement (40) est, en projection sur un plan horizontal, décalé vers l'extérieur, par rapport à l'axe de pivotement (20) du bras porteur (22), d'une distance qui correspond à peu près à l'espacement du point d'appui (44) de roue par rapport à cet axe de pivotement (20).

6. Fixation de roue de secours selon l'une des revendications précédentes, caractérisée en ce que le bras porteur (22) est déplaçable par pivotement par l'intermédiaire d'un mécanisme d'entraînement (cylindre de travail 60).

**Claims**

1. A spare wheel holder for commercial vehicles with a supporting arrangement on which the spare wheel (28) is held in its upright rest position within the vehicle outline and can be swivelled outwards into an outwardly deployed operative position, and which has a supporting arm (22) connected at its base with the vehicle and upwardly protruding in the rest position of the spare wheel (28); pivoted on the free end of the supporting arm (22) is a swivelling arm (24), the swivelling axis (26) of which extends parallel with the swivelling axis (20) of the supporting arm (22) and, centrally mounted at its free end in the wheel plane transversal to the swivelling axis (20 and 26) is the spare wheel (28), the pivoting path of which into the rest position is limited by a holder (50), in which arrangement, relative to the rest position of the spare wheel (28), its rotating axis (46) is situated between the swivelling axis (26) connecting the supporting arm (22) and the pivoting arm (24), and the swivelling axis (20) linking the supporting arm (22) on the vehicle side, which swivelling axis (20) is outwardly displaced relative to the rotating axis (46) of the spare wheel (28), characterized in that a projected length of the supporting arm between the swivelling axis (20) on the vehicle side and the swivelling axis (26) of the swivelling arm (24) overlapping the spare wheel (28) onto a vertical plane perpendicular to the swivelling out direction, corresponds substantially to twice the length of the swivelling arm (24), and in that, on the vehicle side, there is provided a wheel housing surface (40) supporting the spare wheel (28), partly rising outwardly, in which arrangement, in the projection on a horizontal frame surface the wheel contact point (44) lies, in the rest position between the swivelling axis (20) of the supporting arm and the rotating axis (46) of the spare wheel (28) on the outwardly rising part (40'') of the tread, connecting onto which is a tread part (40') falling away outwards, keeping the spare wheel (28) from the structural parts protruding over the relevant longitudinal side of the vehicle.

2. A spare wheel holder according to claim 1, characterized in that, related to a substantially horizontal vehicle chassis plane, the angle of rise of the outwardly rising tread part (40'') is smaller than the corresponding angle of a tangent (66) which, in the rest position of the spare wheel (28) is situated in the rotating axis (46) on the swivelling circle (48) of the rotating axis (46).

3. A spare wheel holder according to claim 1 or 2, characterized in that, related to a substantially horizontal vehicle chassis plane, the angle of rise of the outwardly rising tread part (40'') is smaller than the corresponding angle of a tangent (70) which, in the rest position of the spare wheel (28) is situated in the rotating axis (26) of the swivelling arm (24) on the swivelling circle (68) which the swivelling axis (26) of the swivelling arm (24) describes on pivoting the supporting arm (22) around its swivelling axis (20) on the base side.

4. A spare wheel holder according to either claim 2 or 3, characterized in that the rise of the tangent (66) situated in the rotating axis (46) on the swivelling circle (48) is greater than the rise of the tangent (70) situated on the swivelling circle (68) of the swivelling axis (26) of the swivelling arm (24).

5. A spare wheel holder according to one of the foregoing claims, characterized in that the apex (42) between the dropping tread part (40') and the rising tread part (40'') of the wheel tread (40), in the projection onto a horizontal plane, lies outwardly offset by a distance to the swivelling axis of the supporting arm (22) which corresponds substantially to the distance from the wheel contact point (44) to its pivoting axis (20).

6. A spare wheel holder according to one of the preceding claims, characterized in that the supporting arm (22) is swivellable over an actuating drive (working cylinder 60).

# Fig. 1

Fig. 2

EP 0 319 013 B1

# Fig. 3

Fig. 4

EP 0 319 013 B1

# Fig. 5